# EUROPÄISCHE PATENTSCHRIFT

(11) **EP 1 194 278 B1**
(45) Veröffentlichungstag und Bekanntmachung des Hinweises auf die Patenterteilung: **14.05.2003**
(21) Anmeldenummer: 00949212.5
(22) Anmeldetag: 26.06.2000
(51) Int. Cl.: B29C 47/62, B29C 47/66

(54) **EINSCHNECKEN-EXTRUDER**
SINGLE-SCREW EXTRUDER
EXTRUDEUSE A UNE VIS

(30) Priorität: 24.06.1999 DE 19928870
(43) Veröffentlichungstag der Anmeldung: 10.04.2002
(73) Patentinhaber: Extrudex Kunststoffmaschinen GmbH, 75417 Mühlacker (DE)
(72) Erfinder: GRÜNSCHLOSS, Eberhard, D-70619 Stuttgart (DE)
(74) Vertreter: Lindner, Michael, Dipl.-Ing.
(86) Internationale Anmeldenummer: EP0005919
(87) Internationale Veröffentlichungsnummer: WO01000383

(56) Entgegenhaltungen:
- EP-A- 0 069 271
- DE-A- 2 514 307
- US-A- 4 125 333
- US-A- 4 569 595
- US-A- 5 234 652
- PATENT ABSTRACTS OF JAPAN vol. 009, no. 142 (M-388), 18. Juni 1985 (1985-06-18) & JP 60 021228 A (SHOWA DENKO KK), 2. Februar 1985 (1985-02-02)

## Beschreibung

Die vorliegende Erfindung betrifft einen Einschnecken-Extruder mit einer Barriereschnecke und einem Zylinder, in dem die Barriereschnecke drehbar gehalten ist und der zumindest einen Einzugszonen-Längsabschnitt und einen Aufschmelzzonen-Längsabschnitt aufweist.

Die Erfindung betrifft ferner ein Verfahren zum Extrudieren von Kunststoffmaterial mit einem Einschneckenextruder, gemäß dem Oberbegriff des Patentanspruchs 19.

Ein solcher Einschnecken-Extruder mit einer Barriereschnecke ist beispielsweise aus dem Artikel "Zylinder glatt oder genutet", Maschinenmarkt, Würzburg 95 (1989) 48, Seiten 40 bis 43 offenbart. In dieser Druckschrift werden unterschiedliche Konzepte von Barriereschnecken vorgestellt, die in Extrudern mit oder ohne genuteten Einzugsbereich zum Einsatz kommen. Die Zylinder im Bereich des Aufschmelzzonen-Längsabschnitts sind dabei für eine gute Trennung von Schmelze und Feststoff glatt ausgebildet.

Aus der Druckschrift DE 25 14 307 ist ein Schneckengehäuse für einen Extruder bekannt, daß zumindest eine Nut über die gesamte Länge aufweist. Diese Nut dient dazu, einen "Schneckenschlupf", d.h. eine Drehung der Schnecke, ohne das Material in dem Zylinder vorwärts bewegt wird, zu verhindern. Bei der in dieser Druckschrift angegebenen Schnecke handelt es sich nicht um eine Barriereschnecke.

Allgemein sind Einschneckenextruder bekannt, bspw. aus US 5,234,652 oder US 4,125,333. Sie umfassen üblicherweise einen Extruder-Plastifizierzylinder, in dem eine Schnecke drehbar gelagert wird. Ein pulver- oder granulatförmiges Ausgangsmaterial (mit Stabilisatoren, Gleitmitteln, gegebenenfalls Füll- und Farbstoffen versetzte thermoplastische Kunststoffe) wird an einem Ende des Zylinders eingegeben und durch die drehende Schnecke durch den Zylinder zu einem am gegenüberliegenden Ende liegenden sogenannten Ausformwerkzeug oder Matrize transportiert. Zunächst wird das Ausgangsmaterial durch die sogenannte Einzugszone gefördert und dabei verdichtet. An diese Einzugszone schließt sich eine Aufschmelz- bzw. Plastifizierzone an, in der das Ausgangsmaterial durch Reibung an der Zylinderinnenwand aufgeschmolzen wird. Der Aufschmelzvorgang kann - insbesondere beim Anfahren des Extruders - durch äußere Beheizung des Zylinders mittels (meist elektrischen) Heizelementen unterstützt werden. Je nach Anwendungsfall schließt sich an diese Aufschmelzzone eine Homogenisierzone und eine Ausformzone an, in der das plastifizierte Material zur Weiterverarbeitung vorbereitet wird.

In den letzten Jahren haben sich in zunehmendem Maße Einschnecken-Extruder aufgrund ihrer Leistungsfähigkeit durchgesetzt, die auf dem sogenannten Barriereschneckenkonzept basieren. Bei einer sogenannten Barriereschnecke ist der Schneckengang in einen Feststoff- und einen Schmelzekanal durch einen weiteren Steg aufgetrennt. Im Vergleich zu dem primären Steg, wie er von den herkömmlichen Schnecken bekannt ist, läßt der kleiner ausgeführte Barrieresteg auch die Querströmung von Schmelze von dem Feststoffkanal in den Schmelzekanal zu. Der Querschnitt des Schmelzekanals erhöht sich stromabwärts, während der Querschnitt des Feststoffkanals stromabwärts ständig Kleiner wird, um die erwünschte Förderwirkung der Schnecke aufrechtzuerhalten. Durch die sogenannte Barrierezone wird vor allem der Wärmeübergang von Zylinder und Schneckenoberfläche an noch nicht aufgeschmolzenes Granulat verbessert. Einschnecken-Extruder mit Barriererschnecke sind bspw. in EP 0 069 271 A2, US 4,569,595 oder Patent Abstract of Japan Vol. 9, no. 142, 18. Juni 1985 offenbart.

Obgleich sich dieses Barriereschneckenkonzept in der Praxis für viele Anwendungsfälle bewährt hat, bleibt weiterhin das Bedürfnis, die Leistungsfähigkeit eines Einschnecken-Extruders mit Barriereschnecke zu erhöhen, wobei die hierfür notwendigen baulichen Maßnahmen möglichst gering zu halten sind.

Die Aufgabe der vorliegenden Erfindung besteht deshalb darin, einen auf dem Barriereschneckenkonzept basierenden Einschnecken-Extruder so weiterzubilden, daß die Leistungsfähigkeit, insbesondere die Förderleistung und das Druckaufbauvermögen sowie die Aufschmelzleistung, erhöht wird.

Die der Erfindung zugrunde liegende Aufgabe wird von einem Einschnecken-Extruder der eingangs genannten Art dadurch gelöst, daß der Zylinder an seiner Innenwand im Bereich des Aufschmelzzonen-Längsabschnitts zumindest eine in Längsrichtung verlaufende Nut aufweist (gemäß Patentanspruch 1) Zweck mäßige Weiterbildungen der Erfindung nach Patentanspruch 1 sind Gegenstand der abhängigen Ansprüche 2 bis 18.
Durch die Kombination einer Barriereschnecke mit einem Zylinder, der in der Aufschmelzzone zumindest eine Nut aufweist, läßt sich eine deutliche Durchsatzerhöhung gegenüber den herkömmlichen Barriereschnecken-Extrudern erzielen. Dies liegt insbesondere daran, daß der Aufschmelzvorgang des Ausgangsmaterials verbessert wird. Dies ist im wesentlichen darauf zurückzuführen, daß sich Feststoff in der Nut "verhakt" und so in kleinen Portionen in den Schmelzekanal gelangt. Dies führt im übrigen auch zu dem Vorteil, daß die Wärmeübertragung deutlich verbessert wird, da die Zylinderinnenwand im Bereich der Nuten mit Feststoff in Kontakt kommt. Bei den bisher verwendeten Zylindern mit glatter Innenwand bildete die Schmelze quasi eine Wärmesperre, zumindest verschlechterte sie jedoch die Wärmeübertragung von der Zylinderinnenwand nach innen.

Die angesprochene Verbesserung des Aufschmelzvorgangs und der Wärmeübertragung ermöglicht es, die drehzahlbezogene Fördermenge zu erhöhen, ohne zusätzliche bauliche Maßnahmen zu ergreifen. Bei den bisher bekannten Einschnecken-Extrudern war es zur Erhöhung der Förderleistung notwendig, die Länge der Aufschmelzzone und/oder die Drehzahl der Schnecke zu vergrößern. Eine größere Drehzahl hatte jedoch dann zur Folge, daß die Schmelze im Extruder in unerwünschter Weise stärker aufgeheizt wurde, wodurch Schädigungen des Ausgangsmaterials eintreten konnten. Im übrigen mußte anschließend die Schmelze stärker abgekühlt werden, was wiederum zusätzliche bauliche Maßnahmen erforderte.

Zusätzliche bauliche Maßnahmen sind demnach mit dem erfindungsgemäßen Einschnecken-Extruder nicht notwendig. Die Aufgabe der vorliegenden Erfindung wird somit vollkommen gelöst.

Zusätzlich zu den vorgenannten Vorteilen besitzt der erfindungsgemäße Einschnecken-Extruder mit Barriereschnecke darüber hinaus den Vorteil, daß das Druckaufbauvermögen verbessert wird. Gegenüber den bisher bekannten Einschnecken-Extrudern ist es nun nicht mehr notwendig, einen sehr hohen Druck in der sogenannten Einzugszone aufzubauen, um einen vorgegebenen kleineren Druck am Ende des Einschnecken-Extruders zu gewährleisten. Mit dem erfindungsgemäßen Einschnecken-Extruder läßt sich der Druck zwischen Einzugszone und Aufschmelzzone deutlich verringern. Dies führt wiederum zu einer Verringerung des Verschleißes der Schnecke im Übergangsbereich zwischen Einzugsund Aufschmelzzone, da mit geringeren Drücken gearbeitet werden kann.

Aufgrund der Druckreduzierung im Bereich der Einzugszone muß diese nicht mehr wie bisher aufwendig konstruiert, mit Kühlung und "Wärmetrennung" zur beheizten Aufschmelzzone versehen werden. Einzugszone und Aufschmelzzone können daher in vorteilhafter Weise aus einem Stück bestehen.

In einer bevorzugten Weiterbildung der Erfindung erstreckt sich die Nut parallel zur Längsachse des Zylinders (axiale Nut), wobei besonders bevorzugt Nuten in der Einzugszone wendelförmig verlaufen.

Es hat sich gezeigt, daß die axiale Ausgestaltung der Nut optimale Ergebnisse vor allem im Hinblick auf den Fördervorgang und Druckaufbau liefert, ohne jedoch den Aufschmelzvorgang bzw. die Homogenität der Schmelze negativ zu beeinflussen. Selbstverständlich ist auch eine wendelförmige Nut denkbar.

In einer bevorzugten Weiterbildung weist der Zylinder mehrere in Umfangsrichtung beabstandet zueinander liegende Nuten auf, die sich vorzugsweise parallel zur Zylinderlängsachse erstrekken.

Dies hat den Vorteil, daß das Einbringen der Nuten gegenüber der wendelförmig sich erstreckenden Nut vereinfacht wird.

In einer weiteren bevorzugten Weiterbildung variiert die Breite und/oder die Tiefe der Nut in Längsrichtung, wobei sich vorzugsweise die Tiefe der Nut zum stromabwärts liegenden Ende des Aufschmelzzonen-Abschnitts verringert, vorzugsweise auf null.

In einer weiteren bevorzugten Weiterbildung der Erfindung ist auch an der Zylinderinnenwand im Bereich des Einzugszonen-Abschnitts zumnindest eine Nut vorgesehen, die sich parallel zur Längsachse oder wendelförmig erstreckt. Bevorzugt mündet diese Nut im Bereich des Einzugszonenabschnitts übergangslos in die Nut im Bereich der Aufschmelzzone ein, wobei besonders bevorzugt beide Nuten denselben Steigungswinkel aufweisen.

Dies hat den Vorteil, daß die Nut ohne Unterbrechung kontinuierlich längs der Einzugs- und Aufschmelzzone verläuft, wodurch Förderung und Druckaufbau weiter verbessert werden.

In einer bevorzugten Weiterbildung ist der Zylinder einstückig ausgebildet, wobei er vorzugsweise einen konstanten Innendurchmesser aufweist. Diese Maßnahmen haben den Vorteil, daß die bisher übliche und konstruktiv sehr aufwendige Trennung in eine Einzugszone mit gekühlter Nutbuchse und eine beheizte Aufschmelzzone entfallen kann. Auf diese Weise können Herstellkosten eingespart werden. Außerdem kann aufgrund der guten Förderwirkung des Gesamtsystems auf eine Kühlung der Einzugszone weitgehend verzichtet werden, was Betriebskosten spart.

In einer weiteren bevorzugten Weiterbildung ist die Barriereschnecke mit zwei oder mehreren Kanalpaaren ausgebildet, so daß zwei oder mehrere Feststoff- und zwei oder mehrere Schmelzekanäle entstehen.

Dies hat den Vorteil, daß sich die Aufschmelzleistung des Einschnecken-Extruders damit gegenüber der einkanalpaarigen Barriereschnecke erhöhen läßt. Außerdem kann dadurch der abrasive Verschleiß am Hauptsteg der Schnecke minimiert werden.

Die der Erfindung zugrunde liegende Aufgabe wird auch durch ein Verfahren der eingangs genannten Art gelöst, das dadurch gekennzeichnet ist, daß im Bereich der Aufschmelzzone festes Kunststoffmaterial (Feststoff) in definierter Menge aus dem Feststoffkanal in den Schmelzekanal transportiert wird (gemäß Patentanspruch 19).

Vorzugsweise wird der Feststoff an definierten Stellen entlang des Zylinders aus dem Feststoffkanal in den Schmelzekanal transportiert. Besonders bevorzugt erfolgt der Transport der definierten Menge an Feststoff durch den herrschenden Differenzdruck zwischen Feststoffkanal und Schmelzkanal.

Weitere Vorteile der Erfindung ergeben sich aus der nachfolgenden Beschreibung und den Zeichnungen.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung wird nun anhand eines Ausführungsbeispiels in bezug auf die Zeichnungen näher erläutert. Dabei zeigen:
- Fig. 1a: eine schematische Schnittdarstellung eines Einschnecken-Extruders gemäß einer ersten Ausführungsform;
- Fig. 1b: eine schematische Schnittdarstellung eines Teils eines Einschnecken-Extruders gemäß einer zweiten Ausführungsform;
- Fig. 2: eine schematische Darstellung einer Barriereschnekke;
- Fig. 3: eine schematische Darstellung eines Längsabschnitts des Extruders im Bereich der Aufschmelzzone;
- Fig. 4a: eine schematische Darstellung eines Querschnitts der Barriereschnecke in zweikanaliger Ausführung; und
- Fig. 4b: eine schematische Darstellung eines Ausschnittes der Zylinder-Innenwandung.

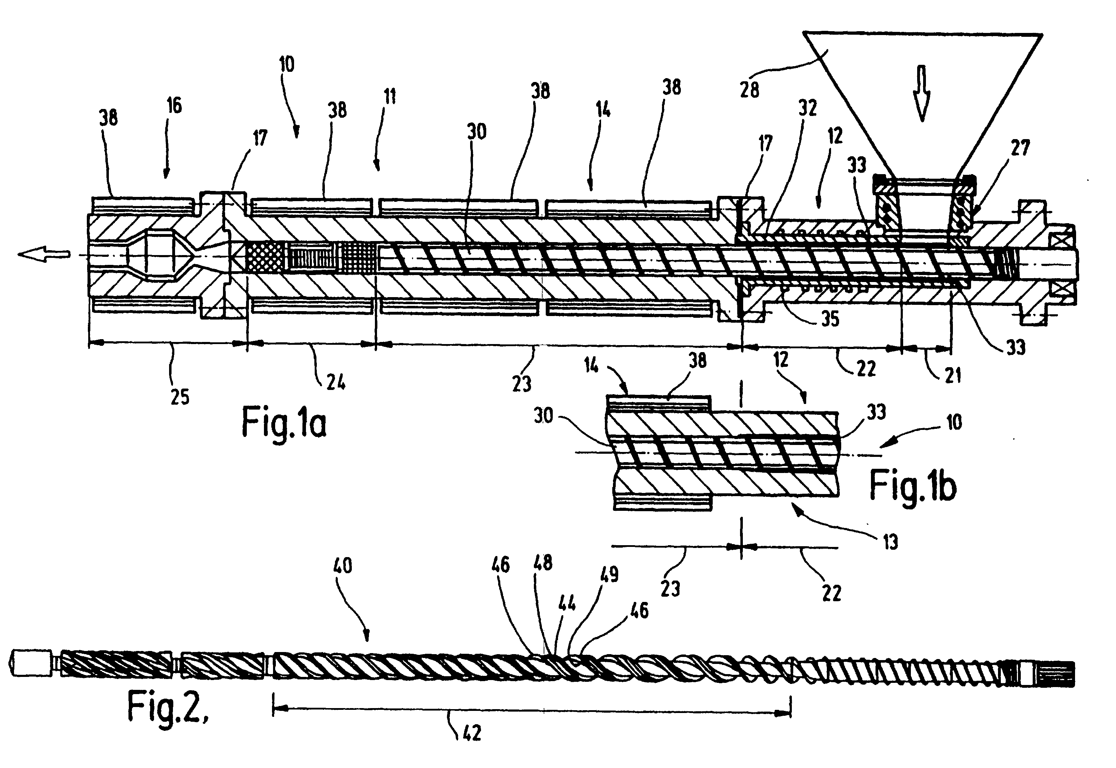

In Fig. 1a ist ein Einschnecken-Extruder zum Extrudieren eines Kunststoffmaterials mit dem Bezugszeichen 10 gekennzeichnet. Der Einschnecken-Extruder 10 (im folgenden der Einfachheit halber nur noch als Extruder bezeichnet) umfaßt einen rohrförmigen Zylinder 11, der sich in der vorliegenden Ausführungsform aus drei einzelnen rohrförmigen Zylinder-Baueinheiten 12, 14, 16 zusammensetzt. Die Verbindung der einzelnen Baueinheiten 12, 14, 16 erfolgt jeweils über einen Flansch 17.

Der Zylinder 11 gliedert sich in mehrere funktionale Längsabschnitte, nämlich eine Füllzone 21, an die sich eine Einzugszone 22, eine Aufschmelzzone 23, eine Homogenisierzone 24 und schließlich eine Ausformzone 25 anschließen. In Fig. 1a bildet die Füllzone 21 das rechte Ende und die Ausformzone 25 das linke Ende des Zylinders 11.

Innerhalb des Zylinders 11 ist koaxial zu diesem eine Schnecke 30 drehbar gelagert, wobei der Übersichtlichkeit wegen weder der Schneckenantrieb noch die Schneckenlagerung dargestellt sind. Im übrigen läßt aus Übersichtlichkeitsgründen die Darstellung auch nicht erkennen, daß die Schnecke erfindungsgemäß als Barriereschnecke ausgebildet ist. Eine genauere Beschreibung der Barriereschnecke erfolgt nachfolgend. Die Schnecke 30 selbst erstreckt sich ausgehend vom Schneckenschaft und von der Füllzone 21 bis zum Ende der Homogenisierzone 24. In der Baueinheit 12 des Zylinders 11 ist im Bereich der Einfüllzone 21 eine Öffnung 27 vorgesehen, die eine Verbindung von außen in den Innenraum des Zylinders 11 ermöglicht. Zur Erleichterung der Zuführung von Ausgangsmaterial ist auf der Öffnung 27 ein Trichter 28 angebracht.

Fig. 1a läßt ferner erkennen, daß die Baueinheit 12 eine innenliegende Buchse 32 aufweist, die in die rohrförmige Baueinheit 12 eingesteckt ist. Die Buchse 32 weist in axialer Richtung verlaufende Nuten an ihrer der Schnecke 30 zugewandten Innenfläche auf. In Fig. 1a sind zwei dieser Nuten mit dem Bezugszeichen 33 gekennzeichnet. Üblicherweise weist die Buchse 32 eine Vielzahl von axial verlaufenden, in Umfangsrichtung gleichmäßig zueinander beabstandeten Nuten auf. Die Tiefe der Nuten 33 ist im Bereich der Einfüllzone 21 maximal und nimmt im allgemeinen gleichmäßig in Förderrichtung ab. Am Ende der Einzugszone 22 ist die Nuttiefe im allgemeinen null.

Die Buchse 32 ist von ringförmigen oder wendelförmigen Kühlkanälen 35 umgeben, wobei der Übersichtlichkeit wegen weder der Kühlmittel-Eingang noch der Kühlmittel-Ausgang in der Figur dargestellt sind.

Die rohrförmige Zylinder-Baueinheit 14 ist von schematisch dargestellten Heizelementen 38 umgeben, wobei die Heizelemente 38 sich über die gesamte Länge dieser Baueinheit erstrecken, so daß sowohl die Aufschmelzzone 23 als auch die Homogenisierzone 24 über derartige Heizelemente 38 erwärmbar sind. In der vorliegenden Ausführungsform sind mehrere Heizelemente 38 in Längsrichtung hintereinander angeordnet. Ein weiteres Heizelement 38 umgibt auch die dritte Baueinheit 16 im Bereich der Ausformzone 25. Die Heizelemente können auch mit Kühlelementen versehen sein, um bei höheren Schneckendrehzahlen ggf. entstehende überschüssige Friktionswärme abzuführen.

In der in Fig. 1a gezeigten Ausführungsform des Extruders 10 sind die beiden Baueinheiten 12 und 14 über einen Flansch 17 miteinander verbunden. Selbstverständlich ist es auch möglich, die beiden Baueinheiten 12, 14 zu einer Baueinheit 13 zu vereinigen, so daß auf eine Flanschverbindung verzichtet werden kann. Diese hinsichtlich des baulichen Aufwandes verbesserte Ausführungsform eines Extruders 10' ist als Teilausschnitt in Fig. 1b gezeigt. Neben der einstückigen Ausbildung der Baueinheit 13 ist zu erkennen, daß weder eine Nutbuchse 32 noch eine Kühlung in Form von Kühlkanälen 35 vorgesehen ist. Der nicht gezeigte Teil des Extruders 10' entspricht jedoch dem des Extruders 10 der Fig. la. Ferner sind in beiden Fig. 1a, 1b gleiche Teile mit den gleichen Bezugszeichen bezeichnet, so daß auf deren nochmalige Beschreibung verzichtet wird.

Ein solcher Extruder 10 bzw. 10' übt nun grundsätzlich folgende Funktionen aus:

In den Trichter 28 wird ein zumeist granulatförmiges Ausgangsmaterial aus Kunststoff eingegeben, das dann durch die Öffnung 27 hindurch in die Einfüllzone 21 gelangt. Durch entsprechende Rotation der Schnecke 30 wird dieses Ausgangsmaterial - in Fig. 1 nach links - transportiert. Durch entsprechende Ausgestaltung der Schnecke 30 und der Nuten 33 wird das Ausgangsmaterial in der Einzugszone 22 verdichtet. Bedingt durch den Druckaufbau, der durch die Nuten 33 verstärkt wird, ist eine Kühlung dieses Bereichs über die Kühlkanäle 35 notwendig. Nach Durchlaufen der Einzugszone 22 gelangt das verdichtete Ausgangsmaterial (Feststoff) in die Aufschmelzzone 23, in der durch Reibung des Feststoffes an der Zylinderinnenwand und/oder durch Wärmezufuhr über die Heizelemente 38 ein Aufschmelzen des Feststoffs erfolgt. Am Ende der Aufschmelzzone 23 gelangt dann die Schmelze in die Homogenisierzone 24, in der eine entsprechend ausgebildete Form der Schnecke 30 eine Restaufschmelzung ggf. noch vorhandener Feststoffteilchen durchführt. Außerdem können in diesem Abschnitt Zusatzstoffe wirkungsvoll eingemischt werden. Die homogenisierte Schmelze gelangt abschließend in die Ausformzone 25, wo die Schmelze zur Weiterverarbeitung vorbereitet wird.

Die Förderleistung des Extruders 10 hängt im wesentlichen von der Rotationsgeschwindigkeit der Schnecke 30 ab. Eine gewünschte Erhöhung der Förderleistung könnte somit durch eine Erhöhung der Rotationsgeschwindigkeit erzielt werden. Dabei ergibt sich jedoch das Problem, daß der Grad der Homogenität der Schmelze am Ende der Aufschmelzzone 23 sinkt, da viele Feststoffteile zu schnell die Aufschmelzzone 23 passiert haben. Darüber hinaus wirkt der an der Zylinderinnenwandung entstehende Schmelzefilm wie ein Wärmeisolator, der eine effektive Wärmeübertragung von den Heiz-/Kühlelementen 38 an den Feststoff weitgehend verhindert.

Eine Verbesserung der Leistungsfähigkeit gegenüber einer herkömmlichen Schnecke liefert eine sogenannte Barriereschnecke, die in Fig. 2 in schematischer Darstellung gezeigt ist, und die in dem Extruder 10 gemäß Fig. 1a als Schnecke 30 bezeichnet ist. Die Barriereschnecke als solche ist bekannt, so daß auf deren genauen Aufbau und Funktionsweise nicht weiter eingegangen werden soll. Eine Beschreibung der Funktionsweise einer solchen Barriereschnecke findet sich beispielsweise in "Der Einschnecken-Extruder - Grundlagen und Systemoptimierung", VDI-Verlag 1997.

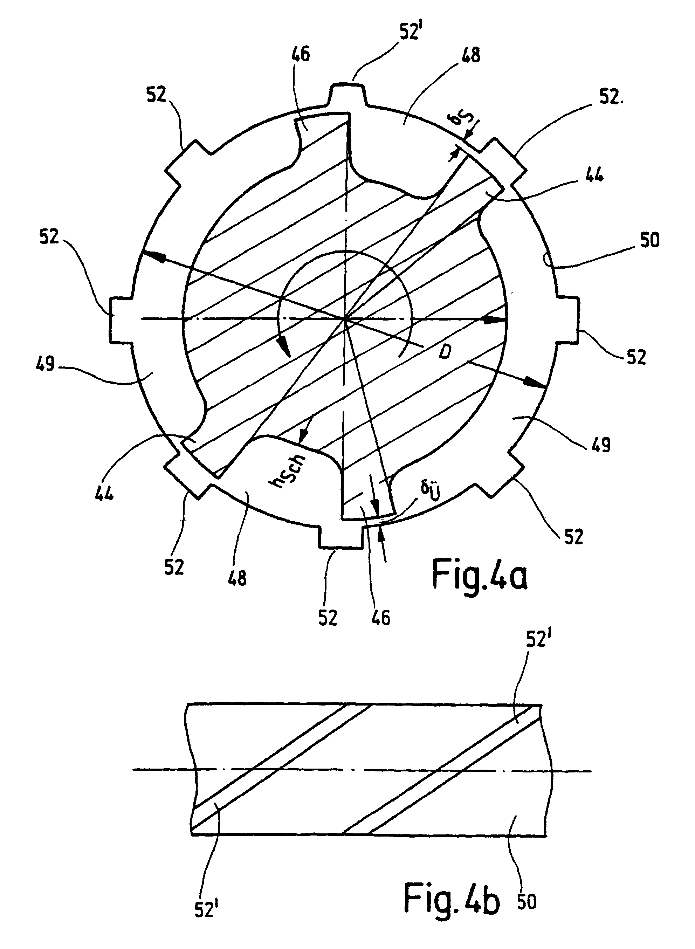

In Fig. 2 ist eine Barriereschnecke mit dem Bezugszeichen 40 gekennzeichnet. Die Barriereschnecke 40 weist mehrere Längsabschnitte auf, wobei lediglich der mit dem Bezugszeichen 42 gekennzeichnete Längsabschnitt für die nachfolgende Beschreibung von Bedeutung ist. Dieser Längsabschnitt 42 liegt im eingebauten Zustand der Barriereschnecke 40 in der Aufschmelzzone 23 des Zylinders 11. Die Barriereschnecke 40 zeichnet sich dadurch aus, daß sie neben einem Hauptsteg 44 zusätzlich einen sogenannten Barrieresteg 46 aufweist. Der Hauptsteg 44 bildet mit dem stromabwärts folgenden Barrieresteg 46 einen Schmelzekanal 48 und mit dem stromaufwärts folgenden Barrieresteg 46 einen Feststoffkanal 49. Fig. 2 läßt noch erkennen, daß die Breite des Feststoffkanals zum stromabwärtigen Ende des Längsabschnitts 42 abnimmt, während die des Schmelzekanals 48 zunimmt. Die besondere Funktionsweise der Barriereschnecke 40 beruht unter anderem darauf, daß der Spalt zwischen der Zylinderinnenwand und dem Hauptsteg geringer ist als der Spalt zwischen Barrieresteg 46 und Zylinderinnenwand. Dies ist besonders gut in Fig. 4a zu erkennen, in der eine Barriereschnecke mit zwei Kanalpaaren im Querschnitt dargestellt ist. Deutlich zu erkennen sind in dieser Fig. 4a die beiden diametral gegenüberliegenden Hauptstege 44 und die beiden ebenfalls diametral gegenüberliegenden Barrierestege 46. In Fig. 4a ist der Spalt zwischen dem Hauptsteg 44 und der Innenwandung 50 des Zylinders 11 (Sperrspalt) mit δₛ und der Spalt zwischen dem Barrieresteg 46 und der Innenwand 50 (Barrierespalt) mit δ_{Ü} gekennzeichnet. Bei Barriereschnecken ist dabei δ_{S} in der Regel kleiner als δ_{ü}. Wie bereits erwähnt, wird in Drehrichtung gesehen zwischen einem Barrieresteg 46 und einem Hauptsteg 44 der Feststoffkanal 49 und zwischen einem Hauptsteg 44 und einem nachfolgenden Barrieresteg 46 der Schmelzekanal 48 ausgebildet. Bei der hier gezeigten zweikanalpaarigen Ausführungsform sind zwei solcher Feststoffkanäle 49 und zwei Schmelzekanäle 48 vorgesehen.

Erfindungsgemäß sind nun in der Innenwand 50 des Zylinders 11 im Bereich der Aufschmelzzone 23 Nuten 52 ausgebildet. Bei dem in Fig. 4a vorliegenden Ausführungsbeispiel sind insgesamt acht Nuten 52 vorgesehen, die sich in axialer Richtung erstrecken und in Umfangsrichtung des Zylinders gleichmäßig zueinander beabstandet sind. Ferner weisen die Nuten einen rechteckförmigen Querschnitt auf. Besonders vorteilhaft ist es jedoch, die Nuten 52 so auszubilden, daß keine scharfen Kanten vorhanden sind. Rein beispielhaft ist in Fig. 4a eine einzelne Nut 52' mit abgerundeten Kanten dargestellt. Selbstverständlich ist es auch denkbar und vorteilhaft, statt mehrerer axialer Nuten 52 eine oder mehrere wendelförmige Nuten 52', wie in Fig. 4b schematisch dargestellt, vorzusehen.

Die Nuten 52 weisen eine Breite auf, die etwa im gleichen Größenbereich liegen kann wie die Breite der Haupt- und Barrierestege 44 bzw. 46. Die Tiefe der Nuten 52 muß abhängig vom Anwendungsfall gewählt werden, wobei darauf zu achten ist, daß die Tiefe nicht zu groß ausfällt, da ansonsten eine Verschlechterung der Funktion zu erwarten ist. Sowohl die Nuttiefe als auch die Nutbreite können in Längsrichtung des Zylinders 11 variieren, wobei die Nuttiefe vorzugsweise im stromabwärtigen Endbereich der Aufschmelzzone 23 nahe null geht. Dieses konische Auslaufen der Nuten 52 hat sich als besonders vorteilhaft herausgestellt.

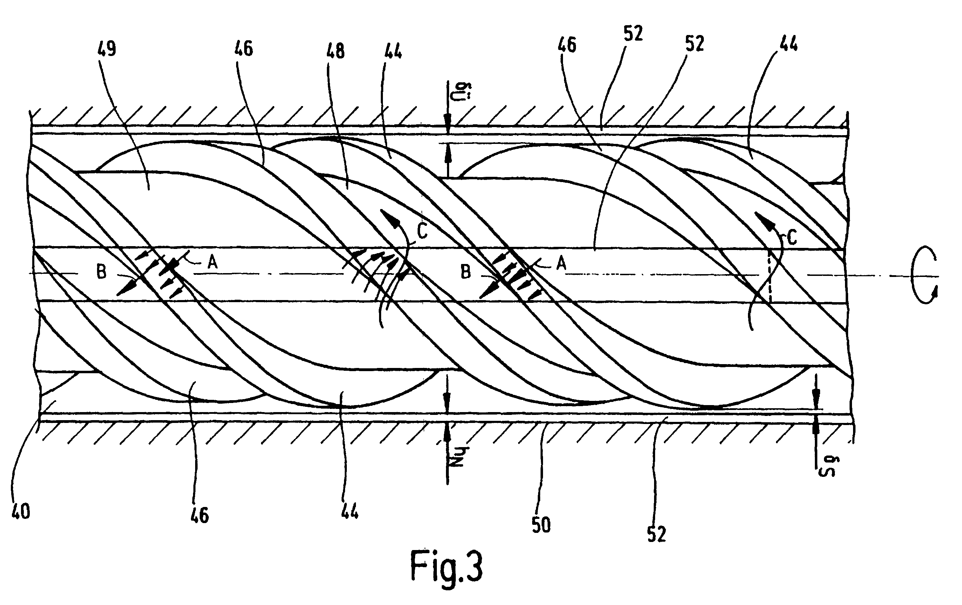

In Fig. 3 ist ein Längsabschnitt des Zylinders 11 im Bereich der Aufschmelzzone 23 nochmals schematisch dargestellt. Die Barriereschnecke 40 umfaßt zwei wendelförmig verlaufende Hauptstege 44 und zwei entsprechend beabstandet dazu ebenfalls wendelförmig verlaufende Barrierestege 46. Wie bereits erwähnt, begrenzen jeweils ein Hauptsteg 44 und ein Barrieresteg 46 den Schmelzekanal 48 bzw. den Feststoffkanal 49. In Fig. 3 sind ferner insgesamt drei Nuten 52 zu erkennen, die jeweils eine Nuttiefe h_{N} besitzen.

Die Nuten 52 können im Bereich der Aufschmelzzone 23 anders ausgebildet sein als im Bereich der Einzugs- oder Feststoffzone 21, 22. Um besondere kleine Feststoffteilchen zu erzielen, kann eine vergleichsweise große Anzahl von schmalen und flachen, wendelförmig oder axial verlaufenden Nuten in der Zylinderinnenfläche der Aufschmelzzone 23 vorgesehen sein. Dadurch vergrößert sich die effektive wärmeübertragende Fläche, wodurch der Aufschmelzvorgang verbessert wird.

Im Betrieb dieser Barriereschnecke 40 in dem mit Nuten 52 versehenen Zylinderabschnitt 23 geschieht nun folgendes:

Der Schneckenabschnitt in der Einzugszone 22 preßt den Feststoff in den Feststoffkanal 49 der Barriereschnecke 40 in der Aufschmelzzone 23. Der Feststoff im Feststoffkanal 49 steht damit unter Druck, der bei der angestrebten hohen Förderleistung in der Regel größer ist als der Druck im Schmelzekanal 48. Aufgrund des Druckunterschieds zwischen Feststoffkanal 49 und Schmelzekanal 48 versucht der Feststoff, in den Schmelzekanal 48 zu gelangen. Aufgrund der gewählten Spalte zwischen den Stegen 46, 44 und der Innenwand 50 gelangt nur der geschmolzene Feststoff als Schmelze über den Barrieresteg 46 in den Schmelzekanal 48. Der Spalt zwischen Hauptsteg 44 und Innenwand 50 ist auch für Schmelze zu gering. Dadurch, daß erfindungsgemäß nun Nuten 52 in der Innenwand 50 des Zylinders 11 vorgesehen sind, vergrößert sich der Spalt zwischen Innenwand und Hauptsteg 44 bzw. Barrieresteg 46 immer dann, wenn der jeweilige Steg die Nut 52 überläuft. Dies hat zur Folge, daß der in die Nuten 52 gepreßte Feststoff "portionsweise" in den Schmelzekanal 48 gelangt. So ist beispielsweise in Fig. 3 mit A dargestellt, daß Feststoff in die Nut 52 gepreßt wird, und dadurch die in der Nut befindliche Schmelze verdrängt wird. Diese verdrängte Schmelze fließt in den Schmelzekanal 48, was mit B gekennzeichnet ist. Zusätzlich wird das in den Nuten 52 vorhandene Feststoff-Schmelze-Gemisch in den Schmelzekanal 48 gepreßt, wie durch C gekennzeichnet. Diese "kleinen Portionen" von Feststoff werden im Schmelzekanal 48 weitgehend aufgeschmolzen. Ggf. noch vorhandene Inhomogenitäten am Ende der Aufschmelzzone 23 werden in der nachfolgenden Homogenisierzone 24 beseitigt. Allerdings führt dieser Feststoffübertritt dazu, daß der Druck im Feststoffkanal erheblich abgesenkt werden kann, mit dem Ergebnis, daß sich auch der abrasive Verschleiß an Schnecke 30 und Zylinder 11 verringern läßt.

Dadurch, daß Feststoff in kleinen definierten Portionen frühzeitig in den Schmelzekanal 48 gelangt, kann ein frühzeitiges Vermischen von Schmelze und kleinen Feststoffteilchen erfolgen, so daß einerseits die resultierende Schmelzetemperatur auch bei höheren Drehzahlen in vorteilhafter Weise niedrig gehalten werden kann und andererseits die Homogenität der Schmelze gewährleistet ist.

Wie zuvor ausgeführt ist der Barrierespalt in der Regel größer als der Sperrspalt. Es ist jedoch auch möglich, den Barrierespalt größer oder gleich dem Sperrspalt auszubilden. In einer fertigungstechnisch besonders einfachen Ausführung kann der Barrierespalt gleich groß wie der Sperrspalt sein, wodurch ein separates Abschleifen des Barrierestegs entfallen kann. Bevorzugt wird dann die Spaltweite etwas größer bemessen als sonst bei Extruderschnecken üblich, damit das Überpressen von Schmelze und Feststoffteilchen nicht behindert wird. Hierdurch kann auch die resultierende Schmelzetemperatur in vorteilhafter Weise abgesenkt werden.

Das Überpressen von Schmelze und kleinen Feststoffteilen kann vorzugsweise durch schmale Schlitze im Barrieresteg und/oder dem Hauptsteg, welche im wesentlichen radial und in Umfangsrichtung verlaufen können, wesentlich erleichtert werden. Obgleich der fertigungstechnische Aufwand etwas größer ausfällt, erhöht sich jedoch der mögliche Durchsatz bzw. verbessert sich die Schmelzehomogenität und die Schmelzetemperatur.

Nach alledem verhindern also die erfindungsgemäßen Nuten in der Zylinderinnenwand eine Verschlechterung der Homogenität und der Wärmeübertragung, wenn die Förderleistung gesteigert wird. Die Drehzahl der Schnecke läßt sich aus diesem Grund erhöhen, ohne zusätzliche bauliche Maßnahmen, wie Verlängerung der Aufschmelzzone, Erhöhung der Wärmezufuhr oder Kühlung des Zylinders, vornehmen zu müssen. Es hat sich zudem gezeigt, daß die Nuten die genannten Wirkungen gerade bei Extrudern mit Barriereschnecke zeigen.

## Patentansprüche

1. Einschnecken-Extruder mit einer Barriereschnecke (40) und einem Zylinder (11), in dem die Barriereschnecke (40) drehbar gehalten ist und der zumindest einen Einzugszonen-Längsabschnitt (21, 22) und einen Aufschmelzzonen-Längsabschnitt (23) aufweist, **dadurch gekennzeichnet, daß** der Zylinder (11) an seiner Innenwand (50) im Bereich des Aufschmelzzonen-Längsabschnitts (23) zumindest eine in Längsrichtung verlaufende Nut (52) aufweist.

2. Einschnecken-Extruder nach Anspruch 1, **dadurch gekennzeichnet, daß** sich die Nut (52) parallel zur Längsachse des Zylinders (11) erstreckt.

3. Einschnecken-Extruder nach Anspruch 2, **dadurch gekennzeichnet, daß** sich im Einzugszonen-Längsabschnitt (21, 22) vorgesehen Nuten wendelförmig erstrecken.

4. Einschnecken-Extruder nach einem der vorhergehenden Ansprüche, **dadurch gekennzeichnet, daß** mehrere in Umfangsrichtung des Zylinders (11) beabstandet zueinander liegende Nuten (52) vorgesehen sind.

5. Einschnecken-Extruder nach einem der vorhergehenden Ansprüche, **dadurch gekennzeichnet, daß** die Breite und/oder die Tiefe (h_{N}) der Nut(en) (52) in Längsrichtung variiert.

6. Einschnecken-Extruder nach Anspruch 5, **dadurch gekennzeichnet, daß** sich die Tiefe (h_{N}) der Nut (52) zum stromabwärts liegenden Ende des Aufschmelzzonen-Abschnitts (23) verringert, vorzugsweise auf null.

7. Einschnecken-Extruder nach einem der vorhergehenden Ansprüche, **dadurch gekennzeichnet, daß** an der ZylinderInnenwand (50) im Bereich des Einzugszonen-Abschnitts (22) zumindest eine Nut (33) vorgesehen ist, die sich parallel zur Längsachse oder wendeiförmig erstreckt.

8. Einschnecken-Extruder nach Anspruch 7, **dadurch gekennzeichnet, daß** die Nut (33) im Bereich des Einzugszonenabschnitts (22) übergangslos in die Nut (52) im Bereich der Aufschmelzzone (23) einmündet.

9. Einschnecken-Extruder nach Anspruch 8, **dadurch gekennzeichnet, daß** die Nut (33) und die Nut (52) denselben Steigungswinkel aufweisen.

10. Einschnecken-Extruder nach einem der vorhergehenden Ansprüche, **dadurch gekennzeichnet, daß** der Steigungswinkel der Nut (52) längs der Achse variabel ausgestaltet ist.

11. Einschnecken-Extruder nach einem der vorhergehenden Ansprüche, **dadurch gekennzeichnet, daß** der Zylinder (11) aus einem Stück besteht.

12. Einschnecken-Extruder nach Anspruch 11, **dadurch gekennzeichnet, daß** der Aufschmelzzonen-Abschnitt (23) als Zylinderrohr und der Einzugszonen-Abschnitt (22) als Nutbuchse (32, 33) vorgesehen ist.

13. Einschnecken-Extruder nach einem der vorhergehenden Ansprüche, **dadurch gekennzeichnet, daß** der Zylinder (11) einen Innenraum mit - in Längsrichtung gesehen - konstantem Durchmesser aufweist.

14. Einschnecken-Extruder nach einem der vorhergehenden Ansprüche, **dadurch gekennzeichnet, daß** die Barriereschnecke (40) mit zwei oder mehreren Kanalpaaren ausgebildet ist, so daß zwei oder mehrere Feststoff- (49) und zwei oder mehrere Schmelzekanäle (48) entstehen.

15. Einschnecken-Extruder nach einem der vorhergehenden Ansprüche, **dadurch gekennzeichnet, daß** die Barriereschnecke (40) einen Hauptsteg (44) und einen Barrieresteg (46) aufweist, die mit der Zylinderinnenwand (50) im Bereich des Aufschmelzzonen-Längsabschnitts (23) jeweils einen Spalt bilden, wobei die beiden Spalte (δ_{S}, δ_{Ü}) gleich groß sind.

16. Einschnecken-Extruder nach einem der vorhergehenden Ansprüche, wobei die Barriereschnecke (40) einen Hauptsteg (44) und einen Barrieresteg (46) aufweist, **dadurch gekennzeichnet, daß** Schlitze im Hauptsteg (44) und/oder im Barrieresteg (46) vorgesehen sind, die im wesentlichen radial und in Umfangsrichtung verlaufen.

17. Einschnecken-Extruder nach einem der vorhergehenden Ansprüche, **dadurch gekennzeichnet, daß** die Nut (52) im Aufschmelzzonen-Längsabschnitt (23) bzgl. ihrer Form anders ausgebildet ist als Nuten im Einzugszonen-Längsabschnitt.

18. Einschnecken-Extruder nach Anspruch 17, **dadurch gekennzeichnet, daß** eine große Anzahl von schmalen und flachen, wendelförmig oder axial verlaufenden Nuten (52) vorgesehen sind.

19. Verfahren zum Extrudieren von Kunststoffmaterial mit einem Einschnecken-Extruder (10), der eine in einem Zylinder (11) drehbar gehaltene Barriereschnecke (40) aufweist, wobei der Extruder (10) eine Einzugszone (21, 22) und eine Aufschmelzzone (23) und die Barriereschnecke (40) zumindest einen Feststoffkanal (49) und einen Schmelzekanal (48) umfaßt, **dadurch gekennzeichnet, daß** im Bereich der Aufschmelzzone (23) festes Kunststoffmaterial (Feststoff) in definierter Menge aus dem Feststoffkanal (49) in den Schmelzekanal (48) transportiert wird.

20. Verfahren nach Anspruch 19, **dadurch gekennzeichnet, daß** der Feststoff an definierten Stellen entlang des Zylinders (11) aus dem Feststoffkanal (49) in den Schmelzekanal (48) transportiert wird.

21. Verfahren nach Anspruch 19 oder 20, **dadurch gekennzeichnet, daß** der Transport der definierten Menge an Feststoff im wesentlichen durch den herrschenden Differenzdruck zwischen Feststoffkanal und Schmelzekanal erfolgt.

## Claims

1. Single screw extruder with a barrier screw (40) and a barrel (11), in which the barrier screw (40) is rotatably mounted and which comprises at least a feed zone longitudinal section (21, 22) and a melting zone longitudinal section (23), **characterized in that** the barrel (11) comprises at its inner surface (50) in the area of the melting zone longitudinal section (23) at least one groove (52) extending in a longitudinal direction.

2. Single screw extruder according to claim 1, **characterized in that** the groove (52) extends parallel to the longitudinal axis of the barrel (11).

3. Single screw extruder according to claim 2, **characterized in that** grooves provided in the feed zone longitudinal section (21, 22) extend helically.

4. Single screw extruder according to any of the preceding claims, **characterized in that** a plurality of grooves (52) spaced apart in a circumferential direction of the barrel (11) are provided.

5. Single screw extruder according to any of the preceding claims, **characterized in that** the width and/or depth (h_{N}) of the groove(s) vary in the longitudinal direction.

6. Single screw extruder according to claim 5, **characterized in that** the depth (h_{N}) of the groove (52) decreases towards the downstream end of the melting zone longitudinal section (23) preferably to zero.

7. Single screw extruder according to any of the preceding claims, **characterized in that** at least one groove (33) is provided in the barrel inner surface (50) in the area of the feed zone section (22), the groove extending parallel or helically relative to the longitudinal axis.

8. Single screw extruder according to claim 7, **characterized in that** the groove (33) in the area of the feed zone section (22) leads directly into the groove in the area of the melting zone (23).

9. Single screw extruder according to claim 8, **characterized in that** the groove (33) and the groove (52) have the same lead angle.

10. Single screw extruder according to any of the preceding claims, **characterized in that** the lead angle of the groove (52) is variably formed along the longitudinal axis.

11. Single screw extruder according to any of the preceding claims, **characterized in that** the barrel (11) is provided as a one-piece barrel.

12. Single screw extruder according to claim 11, **characterized in that** the melting zone section (23) is provided as a barrel tube and the feed zone section (22) is provided as a grooved liner (32, 33).

13. Single screw extruder according to any of the preceding claims, **characterized in that** the barrel (11) has an inner space with a diameter being constant in longitudinal direction.

14. Single screw extruder according to any of the preceding claims, **characterized in that** the barrier screw (40) is provided with two or more channel pairs so that two or more solid matter channels (49) and two or more melt channels (48) are defined.

15. Single screw extruder according to any of the preceding claims, **characterized in that** the barrier screw (40) comprises a primary side bar (44) and a barrier side bar (46) which defines together with a barrel inner surface (50) in the area of the melting zone longitudinal section (23) respective gaps, both gaps (Δₛ, Δ_{ü}) being equal.

16. Single screw extruder according to any of the preceding claims, the barrier screw (40) comprising a primary side bar (44) and a barrier side bar (46), **characterized in that** slots are provided in the primary side bar (44) and/or the barrier side bar (46), the slots extending in a substantially radial and circumferential direction.

17. Single screw extruder according to any of the preceding claims, **characterized in that** the groove (52) in the melting zone longitudinal section (23) is formed differently with respect to its shape to the grooves in the feed zone longitudinal section.

18. Single screw extruder according to claim 17, **characterized in that** a great number of narrow and flat helically or axially extending grooves (52) are provided.

19. Method for extruding plastic material using a single screw extruder (10) which comprises a barrel (11) and a barrier screw (40) rotatably mounted therein, the extruder (10) comprising a feed zone (21, 22) and a melting zone (23) and the barrier screw (40) comprising at least a solid matter channel (49) and a melt channel (48), **characterized in that** in the area of the melting zone (23) solid plastic material (solid matter) is transported from the solid matter channel (49) to the melt channel (48) in defined quantities.

20. Method according to claim 19, **characterized in that** the solid matter is transported at defined locations along the barrel (11) from the solid matter channel (49) into the melt channel (48).

21. Method according to claim 19 or 20, **characterized in that** the transport of defined quantities of solid matter is substantially caused by the pressure difference between the solid matter channel and the melt channel.

## Revendications

1. Extrudeuse à simple vis avec une vis de profil barrière (40) et un cylindre (11), dans lequel la vis à profil barrière (40) est maintenue de façon tournante, et présente au moins une section longitudinale d'une zone d'entrée (21, 22) et une section longitudinale d'une zone de fusion (23), **caractérisée en ce que** le cylindre (11) présente sur sa paroi interne (50) dans la zone de la section longitudinale de la zone de fusion (23) une rainure (52) qui s'étend longitudinalement.

2. Extrudeuse à simple vis selon la revendication 1, **caractérisée en ce que** la rainure (52) s'étend parallèlement à l'axe longitudinal du cylindre (11).

3. Extrudeuse à simple vis selon la revendication 2, **caractérisée en ce que** des rainures prévues dans la section longitudinale de la zone d'entrée (21, 22) s'étendent en forme de spirales.

4. Extrudeuse à simple vis selon l'une des revendications précédentes, **caractérisée en ce que** plusieurs rainures (52) placées à distance les unes des autres circonférentiellement sur le cylindre (11) sont prévues.

5. Extrudeuse à simple vis selon l'une des revendications précédentes, **caractérisée en ce que** la largeur et/ou la profondeur (h_{N}) de la ou des rainure(s) (52) varient longitudinalement.

6. Extrudeuse à simple vis selon la revendication 5, **caractérisée en ce que** la profondeur (h_{N}) de la rainure (52) se rétrécit, de préférence à zéro, vers l'extrémité aval de la section de la zone de fusion (23).

7. Extrudeuse à simple vis selon l'une des revendications précédentes, **caractérisée en ce qu'**au moins une rainure (33) est prévue sur la paroi interne (50) du cylindre dans la section de la zone d'entrée (22), rainure qui s'étend parallèlement à l'axe longitudinal ou en forme de spirale,

8. Extrudeuse à simple vis selon la revendication 7, **caractérisée en ce que** la rainure (33) dans la zone de la section de la zone d'entrée (22) débouche sans transition dans la rainure (52) dans la zone de fusion (23).

9. Extrudeuse à simple vis selon la revendication 8, **caractérisée en ce que** la rainure (33) et la rainure (52) présentent le même angle de pas.

10. Extrudeuse à simple vis selon l'une des revendications précédentes, **caractérisée en ce que** l'angle de pas de la rainure (52) est formé de façon variable le long de l'axe.

11. Extrudeuse à simple vis selon l'une des revendications précédentes, **caractérisée en ce que** le cylindre (11) est formé d'une pièce.

12. Extrudeuse à simple vis selon la revendication 11, **caractérisée en ce que** la section de la zone de fusion (23) est prévue comme tube cylindrique et la section de la zone d'entrée (22) comme fourreau rainuré (32, 33).

13. Extrudeuse à simple vis selon l'une des revendications précédentes, **caractérisée en ce que** le cylindre (11) présente un espace interne d'un diamètre constant -considéré dans le sens longitudinal.

14. Extrudeuse à simple vis selon l'une des revendications précédentes, **caractérisée en ce que** la vis à profil barrière (40) est formée avec deux ou plusieurs paires de canaux, de telle sorte qu'il se constitue deux ou plusieurs canaux pour matières solides (49) et deux ou plusieurs canaux pour une masse en fusion (48).

15. Extrudeuse à simple vis selon l'une des revendications précédentes, **caractérisée en ce que** la vis à profil barrière (40) présente un profil principal (44) et un profil barrière (46) qui, avec la paroi interne du cylindre (50), forment chacun un sillon dans la zone de la section longitudinale de la zone de fusion (23), les deux interstices (δ_{S}, δ_{Ü}) étant de taille identique.

16. Extrudeuse à simple vis selon l'une des revendications précédentes, dans laquelle la vis à profil barrière (40) présente un profil principal (44) et un profil barrière (46), **caractérisée en ce que** des fentes qui s'étendent en grande partie radialement et circonférentiellement sont prévues dans le profil principal (44) et/ou dans le profil barrière (46).

17. Extrudeuse à simple vis selon l'une des revendications précédentes, **caractérisée en ce qu'**en ce qui concerne sa forme, la rainure (52) dans la section longitudinale de la zone de fusion (23) est formée d'une autre manière que des rainures dans la section longitudinale de la zone d'entrée.

18. Extrudeuse à simple vis selon la revendication 17, **caractérisée en ce qu'**un grand nombre de rainures (52) étroites et plates, s'étendant en spirales ou axialement, sont prévues.

19. Procédé d'extrusion de matériaux plastiques à l'aide d'une extrudeuse à simple vis (10) qui présente une vis à profil barrière (40) maintenue de façon tournante dans un cylindre (11), l'extrudeuse (10) comprenant une zone d'entrée (21, 22) et une zone de fusion (23) et la vis à profil barrière (40) comprenant au moins un canal pour matières solides (49) et un canal pour la masse en fusion (48), **caractérisé en ce que** dans la région de la zone de fusion (23), un matériau plastique solide (matière solide) est transporté en quantité définie du canal pour matières solides (49) vers le canal pour la masse en fusion (48).

20. Procédé selon la revendication 19, **caractérisé en ce que** la matière solide est transportée à des endroits définis le long du cylindre (11) du canal pour matières solides (49) vers le canal pour la masse en fusion (48).

21. Procédé selon la revendication 19 ou 20, **caractérisé en ce que** le transport de la quantité définie de matière solide a lieu essentiellement grâce à la différence de pression entre le canal pour matière solide et le canal pour la masse en fusion.
